(19)

**Europäisches Patentamt**
**European Patent Office**
**Office européen des brevets**

(11) **EP 4 704 077 A1**

(12) **EUROPEAN PATENT APPLICATION**

(43) Date of publication:
04.03.2026 Bulletin 2026/10

(51) International Patent Classification (IPC):
*G10L 15/06* (2013.01)    *G10L 15/16* (2006.01)
*G10L 19/038* (2013.01)

(21) Application number: 25192976.6

(22) Date of filing: 31.07.2025

(52) Cooperative Patent Classification (CPC):
**G10L 15/063; G10L 15/16;** G10L 19/038

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.08.2024 JP 2024145292**

(71) Applicant: **Ricoh Company, Ltd.**
**Tokyo 143-8555 (JP)**

(72) Inventor: **Kato, Akihiro**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **SPEECH PROCESSING APPARATUS, SYSTEM, METHOD, AND CARRIER MEDIUM**

(57)    A speech processing apparatus (20) includes a task execution unit (220). The task execution unit (220) executes a task related to speech processing based on a trained model. The trained model is trained using speech data and one or more labels obtained by converting, according to a predetermined rule, one or more feature vectors extracted from the speech data.

## FIG. 1

Processed by Luminess, 75001 PARIS (FR)

**Description**

BACKGROUND

Technical Field

The present disclosure relates to a speech processing apparatus, a speech processing system, a speech processing method, and a carrier medium.

Related Art

A technique for executing a task related to speech processing based on a machine learning technology has been proposed. For example, Japanese Unexamined Patent Application Publication No. 2023-64381 discloses an information processing device that obtains speech data, extracts a voice feature from the speech data, obtains a voice expression from the voice feature, and inputs the voice expression to a voice recognition unit to obtain text data.

However, such a known technique has room for efficiently executing a task related to speech processing. For example, in a known speech recognition technique, a speech recognizer is often trained by supervised learning using speech data and transcribed text. However, a large amount of cost is required to prepare a large amount of transcribed text of speech data.

SUMMARY

Embodiments of the present disclosure described herein provide a novel speech processing apparatus including a task execution unit. The task execution unit executes a task related to speech processing based on a trained model. The trained model is trained using speech data and one or more labels obtained by converting, according to a predetermined rule, one or more feature vectors extracted from the speech data.

Embodiments of the present disclosure described herein provide a novel speech processing system including a model training apparatus and the speech processing apparatus. The model training apparatus includes a feature extraction unit, a label conversion unit, and a model generation unit. The feature extraction unit extracts the feature vectors from the speech data. The label conversion unit converts the feature vectors into the labels according to the predetermined rule. The model generation unit generates the trained model using the speech data and the labels.

Embodiments of the present disclosure described herein provide a novel speech processing method executed by a computer. The method includes executing a task related to speech processing based on a trained model. The trained model is trained using speech data and one or more labels obtained by converting one or more feature vectors extracted from the speech data according to a predetermined rule.

Embodiments of the present disclosure described herein provide a novel carrier medium storing computer-readable program code that, when executed by a computer, causes the computer to perform a method. The method includes executing a task related to speech processing based on a trained model. The trained model is trained using speech data and one or more labels obtained by converting one or more feature vectors extracted from the speech data according to a predetermined rule.

With the above-described embodiments, a computer efficiently execute a task related to speech processing.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a block diagram illustrating an overall configuration of a speech processing system;

FIG. 2 is a block diagram illustrating a hardware configuration of a computer;

FIG. 3 is a block diagram illustrating a functional configuration of a speech processing system;

FIG. 4 is a diagram illustrating label conversion processing;

FIG. 5 is a flowchart of model training processing;

FIG. 6 is a flowchart of label conversion processing; and

FIG. 7 is a flowchart of task execution processing.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A description is given below with reference to the drawings. In the drawings, like reference numerals denote like elements, and redundant descriptions thereof may be omitted in the following description.

An embodiment of the present disclosure is an information processing system for executing a task related to speech processing. In the following description, the information processing system is referred to as a "speech processing system." The speech processing system may execute any task related to speech processing. In the following description, the task is simply referred to as a "speech processing task." The speech processing task may include, for example, speech recognition, speech synthesis, speech enhancement, speaker recognition, speaker authentication, emotion recognition, and speech segment detection.

Speech recognition, which is an example of a speech processing task, is a technique for converting speech data including words, voices, or conversations, spoken by a human into text data. The speech recognition technique is widely used in business sites, such as displaying subtitles during a meeting, creating minutes or a report. The use of speech recognition technique facilitates the conversion of speech into text and the input of data into the system, as compared to the conversion of speech into text by a human using a keyboard. Accordingly, the speech recognition technique is expected as an effective input method that leads to business efficiency improvement.

Speech recognizer typically performs supervised learning to learn the correspondence between speech data and a transcribed text corresponding to the speech data. Supervised learning uses speech with transcription, which is a pair of the speech data and the transcribed text corresponding to the speech data. Supervised learning requires a large amount of speech with transcription in order for the speech recognizer to learn with high recognition accuracy and acquiring training data is extremely costly.

In Japanese Patent No. 7052866, a method of learning a speech recognizer by pseudo supervised learning, which is also called semi-supervised learning, has been proposed. In the method of Japanese Patent No. 7052866, a speech recognizer is learned by a small amount of speech with transcription, the learned speech recognizer generates text from a large amount of speech without transcription, a pair of input speech and output text with a high degree of certainty in the inference process is employed as new speech with transcription, and the learned speech recognizer is updated by semi-supervised learning using the pair of input speech and output text. However, in the process of generating a transcribed text for semi-supervised learning, the accuracy of a text inferred by a trained speech recognizer and the accuracy of the degree of certainty are not guaranteed to be reliable as training data. When semi-supervised learning is performed using an erroneous transcribed text, the learning of the speech recognizer is rather hindered.

Another approach that utilizes a large amount of speech without transcription has been proposed in the following non-patent literature: Wei-Ning Hsu, Benjamin Bolte, Yao-Hung Hubert Tsai, Kushal Lakhotia, Ruslan Salakhutdinov, Abdelrahman Mohamed, "HuBERT: Self-Supervised Speech Representation Learning by Masked Prediction of Hidden Units," IEEE/ACM Transactions on Audio, Speech, and Language Processing, vol. 29, pp. 3451-3460, 2021. In the non-patent literature, a masked language model (MLM) used in a machine learning process in a large-scale language model is applied to representation learning of speech. In the method of the non-patent literature, a large amount of speech without transcription is converted into acoustic features in advance, and then a machine learning model of N-class classification is generated by self-supervised learning. The N-class classification is a classification in which a certain proportion of frames are masked, the unmasked frames before and after the masked frame are referenced to determine which of the predetermined N representative values of acoustic features is closest to the masked frame, and then the masked frame is predicted and classified based on the context of the referring. Subsequently, transfer learning to a speech recognition task is performed using a small amount of speech with transcription with the parameters of the pre-trained machine learning model as initial values. In the non-patent literature, the performance can be improved without requiring transcription costs, compared to using only a speech recognizer learned by a small amount of speech with transcription.

In the non-patent literature, in order to perform pre-training using a classification task for masked frames, it is necessary to set the number of true labels to a finite number. On the other hand, different from a masked language model that takes a discrete-valued vector such as text information as an input, the speech recognizer receives input signal in the form of continuous-valued vectors. In the non-patent literature, in order to perform pre-training on input speech using a classification task for masked frames, acoustic features are quantized into N classes in advance, and a finite set of the true labels for self-supervised learning (referred to as "self-supervised labels" in the following description) are created.

As a quantization method in the non-patent literature, the acoustic features of all frames of the speech without transcription are classified into N classes by the k-means clustering, and the classified class numbers are used as self-supervised labels of the respective frames. In addition, the non-patent literature has proposed a method of generating classification labels using product quantization. However, in these quantization methods, the center of gravity of each class is located only in a partial space formed by a population based on a statistical distribution with the speech without transcription as the population. As a result, when a new speech without transcription having a different statistical distribution is added to the pre-training, an appropriate class may not exist in the partial space. In such a case, continuing the training of the pre-trained model may promote imbalance in the classification model, and the performance may not be sufficiently improved when the transfer learning to the speech recognition model is applied.

An object of an embodiment of the present disclosure is to efficiently execute a speech processing task. Accordingly, the speech processing task is executed based on a pre-trained model that has been trained using speech data and labels obtained by converting feature vectors extracted from the speech data in accordance with a predetermined rule.

In the training process of the pre-trained model, the element of statistical inference is excluded from the generation step of the self-supervised labels to exclude the dependency of the self-supervised labels on the data distribution. In addition, since the self-supervised labels based solely on the language information (phoneme) in the speech data are derived, the self-supervised learning highly suited for the speech processing task is enabled.

The self-supervised labels are derived using the deterministic operation according to the predetermined rule without using the statistical distribution of the data set, and thus the speech processing task can be efficiently executed. Since a pre-trained model that can be additionally trained using a small amount of transcribed text is generated, various speech processing tasks can be efficiently executed.

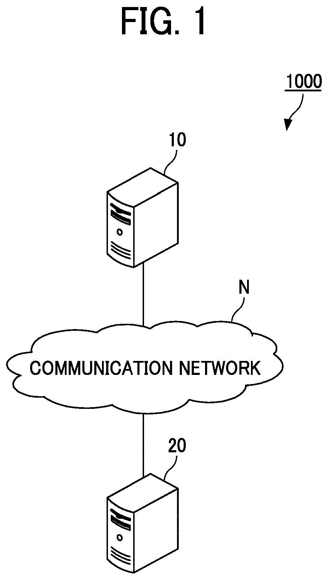

A description is given below of an overall configuration of the speech processing system with reference to FIG. 1. FIG. 1 is a block diagram illustrating the overall configuration of a speech processing system 1000.

As illustrated in FIG. 1, the speech processing system 1000 includes a model training apparatus 10 and a speech processing apparatus 20. The model training apparatus 10 and the speech processing apparatus 20 are connected to a communication network N. The communication network N allows the model training apparatus 10 and the speech processing apparatus 20 that are connected to the communication network N to communicate with each other.

The communication network N is, for example, a wired communication network such as the Internet, a local area network (LAN), or a wide area network (WAN). Alternatively, the communication network N may be a wireless communication network such as a wireless LAN or a short-range wireless communication network, or a mobile communication network such as worldwide interoperability for microwave access (WiMAX), long term evolution (LTE), or 5th generation (5G) network.

The model training apparatus 10 is an information processing apparatus that generates a machine learning model for executing the speech processing task. The model training apparatus 10 may be, for example, a computer such as a personal computer (PC), a workstation, or a server.

The machine learning model may be, for example, a neural network. The neural network may be, for example, a deep neural network based on deep learning, a recurrent neural network, an attention mechanism model, or an autoregressive model (for example, a transformer).

The model training apparatus 10 stores speech data to be learned in advance. The speech data to be learned includes speech without transcription and speech with transcription. The speech with transcription may be smaller than the speech without transcription. The model training apparatus 10 generates a pre-trained model based on the speech without transcription. The model training apparatus 10 additionally trains the pre-trained model based on the speech with transcription to generate a trained machine learning model (also referred to simply as a "trained model" in the following description).

The speech processing apparatus 20 is an information processing apparatus that executes the speech processing task based on a trained model. The speech processing apparatus 20 may be, for example, a computer such as a personal computer, a workstation, or a server.

The speech processing apparatus 20 stores a trained model. The trained model may be generated by the model training apparatus 10. The speech processing apparatus 20 receives an input of speech data to be processed. The speech processing apparatus 20 inputs the input speech data to the trained model to execute the speech processing task. The speech processing apparatus 20 outputs the execution result of the speech processing task.

The model training apparatus 10 or the speech processing apparatus 20 is not limited to a computer as long as the model training apparatus 10 or the speech processing apparatus 20 has a communication function. Examples of the model training apparatus 10 or the speech processing apparatus 20 include, but not limited to, an output device such as an image forming apparatus (e.g., a printer, a facsimile, a multifunction peripheral/product/printer, and a scanner), a projector (PJ), an interactive whiteboard (an electronic whiteboard having mutual communication capability), and a digital signage device. Examples of the model training apparatus 10 or the speech processing apparatus 20 also include, but not limited to, a head-up display (HUD), an industrial machine, an imaging device, a sound collecting device, a medical device, a networked home appliance, an automobile (connected car), a laptop computer (PC), a mobile phone, a smartphone, a tablet terminal, a game console, a personal digital assistant (PDA), a digital camera, a wearable PC, and a desktop PC.

The configuration of the speech processing system 1000 of FIG. 1 is one example, and the speech processing system 1000 may have another suitable system configuration. For example, the model training apparatus 10 or the speech processing apparatus 20 may be implemented by a single information processing apparatus or may be a system implemented by a plurality of information processing apparatuses. The speech processing system 1000 may include various types of devices that perform at least one of input and output of electronic data, and these devices may use various services provided by the speech processing system 1000.

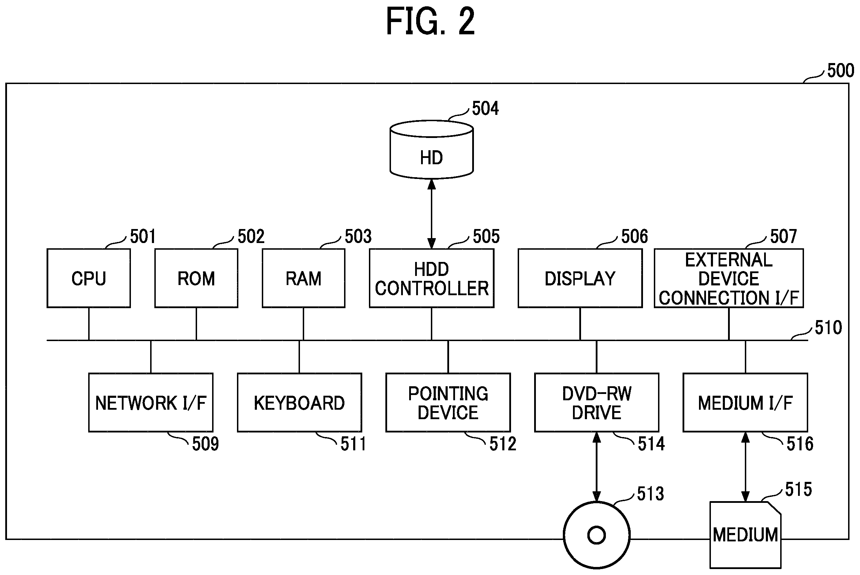

A description is given below of a hardware configuration of each of the model training apparatus 10 or the speech processing apparatus 20 included in the speech processing system 1000 with reference to FIG. 2. The model training apparatus 10 or the speech processing apparatus 20 included in the speech processing system 1000 may be implemented by a computer. FIG. 2 is a block diagram illustrating a hardware configuration of a computer 500.

As illustrated in FIG. 2, the computer 500 includes a central processing unit (CPU) 501, a read-only memory (ROM) 502, a random-access memory (RAM) 503, a hard disk (HD) 504, a hard disk drive (HDD) controller 505, a display 506, an external device connection interface (I/F) 508, a network I/F 509, a bus line 510, a keyboard 511, a pointing device 512, a digital versatile disk rewritable (DVD-RW) drive 514, and a medium I/F 516.

The CPU 501 controls the overall operation of the computer 500. The ROM 502 stores programs such as an initial program loader (IPL) to boot the CPU 501. The RAM 503 is used as a work area for the CPU 501. The HD 504 stores various data such as a program. The HDD controller 505 controls the reading and writing of various data from and to the HD 504 under the control of the CPU 501.

The display 506 displays various information such as a cursor, a menu, a window, a character, or an image. The external device connection I/F 508 is an interface for connecting the computer 500 to various external devices. Examples of the external devices include, but not limited to, a universal serial bus (USB) memory and a printer. The network I/F 509 is an interface that enables data communication through the communication network N. The bus line 510 is, for example, an address bus or a data bus, which electrically connects the components illustrated in FIG. 2, such as the CPU 501.

The keyboard 511 is an input device provided with multiple keys for allowing a user to input characters, numerals, or various instructions. The pointing device 512 serves as an input device that allows the user to, for example, select or execute a specific instruction, select a target for processing, or move a cursor being displayed. The DVD-RW drive 514 controls the reading and writing of various kinds of data from and to a DVD-RW 513, which serves as a removable storage medium. The DVD-RW is one example of the removable storage medium. In another example, a digital versatile disk recordable (DVD-R) may be used as the removable storage medium. The medium I/F 516 controls the reading and writing (storing) of data from and to a storage medium 515 such as a flash memory.

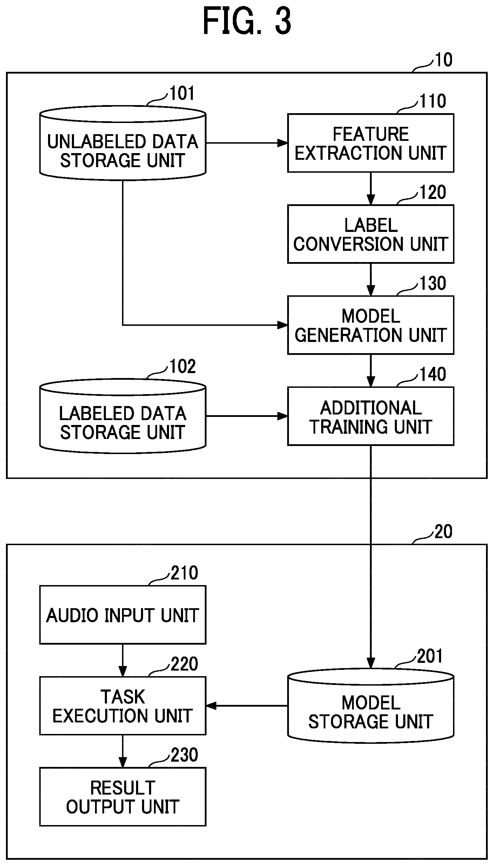

A description is given below of a functional configuration of the speech processing system 1000 with reference to FIG. 3. FIG. 3 is a block diagram illustrating the functional configuration of the speech processing system 1000.

As illustrated in FIG. 3, the model training apparatus 10 includes an unlabeled data storage unit 101, a labeled data storage unit 102, a feature extraction unit 110, a label conversion unit 120, a model generation unit 130, and an additional training unit 140.

The unlabeled data storage unit 101 and the labeled data storage unit 102 are implemented by using, for example, the HD 504 illustrated in FIG. 2. Reading or writing of the data stored in the HD 504 is performed via, for example, the HDD controller 505.

The feature extraction unit 110, the label conversion unit 120, the model generation unit 130, and the additional training unit 140 are implemented by, for example, processing executed by the CPU 501 according to a program loaded from the HD 504 to the RAM 503 illustrated in FIG. 2.

The unlabeled data storage unit 101 stores unlabeled data in advance. The unlabeled data is data to which true labels are not assigned. The unlabeled data may be speech data that is not transcribed (i.e., speech without transcription). A sufficient amount of unlabeled data is stored in advance in the unlabeled data storage unit 101.

The labeled data storage unit 102 stores labeled data in advance. The labeled data is data to which true labels are assigned. The labeled data may be a pair of speech data and text data obtained by transcribing the speech data (i.e., speech with transcription). The labeled data storage unit 102 may store a very small amount of labeled data.

The speech data is electronic data based on a voice spoken by a human. The speech data may be a voice signal in a time domain in which human voice is recorded. The speech data may be data obtained by converting a voice signal in the time domain into the frequency domain. The speech data is a sequence of frames of voice signals converted into a log-Mel spectrogram. The dimensionality of the log-Mel spectrogram can be any number. In the present embodiment, the dimensionality of the log-Mel spectrogram is set to, for example, 80.

The text data included in the labeled data may be text data indicating the content of the speech included in the speech data. The text data included in the labeled data may not be text data transcribed by a human. The text data included in the labeled data may be, for example, a speech recognition result of speech data.

The feature extraction unit 110 extracts feature vectors from the unlabeled data. The feature extraction unit 110 may extract a feature vector from each frame of the unlabeled data to generate a sequence of feature vectors. The feature vector includes Mel-frequency cepstral coefficients (MFCCs). For example, the feature extraction unit 110 may apply discrete cosine transform to the 80-dimensional log-Mel spectrogram to convert the 80-dimensional log-Mel spectrogram into 80-dimensional Mel-frequency cepstral coefficients.

The label conversion unit 120 converts the feature vector into a self-supervised label. The label conversion unit 120 converts the feature vector extracted by the feature extraction unit 110 into the self-supervised label. The label conversion unit 120 converts the feature vector extracted from the unlabeled data into the self-supervised label. The label conversion unit 120 converts each of the feature vectors corresponding to each frame of the unlabeled data into the self-supervised label to generate a sequence of self-supervised labels.

The label conversion unit 120 converts the feature vector into the self-supervised label according to a predetermined conversion rule. The conversion rule is a rule that deterministically derives a self-supervised label uniquely from a feature vector itself without depending on a statistical distribution of unlabeled data.

The label conversion unit 120 may quantize the feature vector into an integer having a predetermined value. The label conversion unit 120 may quantize a part of the feature vector into the integer. The label conversion unit 120 may obtain an element indicating language information in the feature vector as a part of the feature vector. The label conversion unit 120 obtains a predetermined d-dimensional element from the feature vector as a part of the feature vector. The label conversion unit 120 may obtain elements of d-dimensions or less in the feature vector as a part of the feature vector. In this case, d is an integer less than the dimensionality of the feature vector. In this case, d is an integer of four or more and less than 80. In this case, d may be set to any integer, and may be, for example, 10.

The Mel-frequency cepstral coefficients are generated by performing discrete cosine transform on the log-Mel spectrogram. As a result, the language information (phoneme) of the voice signal is stored in low-dimensional elements, and the paralinguistic and non-verbal information is stored in high-dimensional elements. The non-verbal information is, for example, a voice tone, a prosody, or noise. Accordingly, the label conversion unit 120 obtains low-dimensional elements from the feature vector and discard high-dimensional elements to quantize the voice signal into a small number of integers while maintaining the language information of the voice signal.

The label conversion unit 120 converts each dimension of the feature vector into a single-digit base $\beta$ number, and convert an integer of the base $\beta$ number obtained by connecting the digits into a decimal number by radix conversion, thereby quantizing the feature vector into an integer of the decimal number. In this case, $\beta$ is an integer of 2 or more.

Specifically, the label conversion unit 120 normalizes the feature vector so that the average is zero and the variance is one. Subsequently, the label conversion unit 120 converts each dimension of the normalized feature vector into a single-digit base $\beta$ number. The label conversion unit 120 compares the dimension with $\beta$ - 1 thresholds to convert each dimension of the feature vector into a base $\beta$ number.

For example, the label conversion unit 120 converts the n-th dimensional element $x_n$ of the feature vector into a base $\beta$ number by Equation 1. In this case, n is an integer of one or more and d or less, and $\lambda_1, \lambda_2, ..., \lambda_{\beta-1}$ are predetermined thresholds.

$$\text{Equation 1}$$

$$\begin{cases} x_n = 0 & as & x_n < \lambda_1 \\ x_n = 1 & as & \lambda_1 \leq x_n < \lambda_2 \\ & \vdots \\ x_n = \beta - 1 & as & \lambda_{\beta-1} \leq x_n \end{cases}$$

In the case of conversion into a binary number (i.e., $\beta = 2$), the label conversion unit 120 sets the threshold to $\lambda_1 = 0$ and calculate Equation 2.

## Equation 2

$$\begin{cases} x_n = 0 & as & x_n < \lambda_1 \\ x_n = 1 & as & \lambda_1 \leq x_n \end{cases}$$

In the case of conversion into a ternary number (i.e., $\beta = 3$), the label conversion unit 120 sets the threshold to $\lambda_1 = -0.5$ and $\lambda_2 = 0.5$ and calculate Equation 3.

## Equation 3

$$\begin{cases} x_n = 0 & as & x_n < \lambda_1 \\ x_n = 1 & as & \lambda_1 \leq x_n < \lambda_2 \\ x_n = 2 & as & \lambda_2 \leq x_n \end{cases}$$

The label conversion unit 120 connects the base $\beta$ number corresponding to the respective dimensions of the feature vector in accordance with the number of dimensions. As a result, an integer expressed by a d-digit base $\beta$ number is generated. The label conversion unit 120 converts the d-digit base $\beta$ number into a decimal integer. The label conversion unit 120 obtains the decimal integer as a self-supervised label.

The label conversion unit 120 quantizes the feature vector (Mel-frequency cepstral coefficients), which is a continuous-valued vector, into $\beta^d$ classes. For example, when elements of 10 dimensions or less in the feature vector are converted into binary numbers, $\beta = 2$ and $d = 10$, and thus the label conversion unit 120 can quantize into $\beta^d = 2^{10} = 1024$ classes. For example, when the elements of six or less dimensions in the feature vector are converted into ternary numbers, $\beta = 3$ and $d = 6$, and thus the label conversion unit 120 can quantize into $\beta^d = 3^6 = 729$ classes.

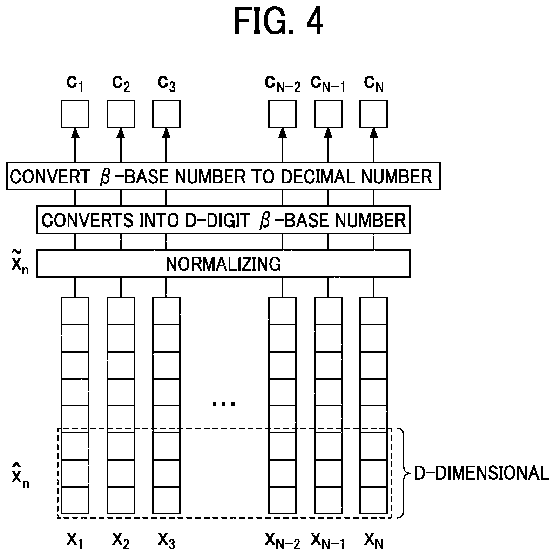

A description is given below of the label conversion processing executed by the label conversion unit 120 with reference to FIG. 4. FIG. 4 is a diagram illustrating the label conversion processing.

The signs $x_1$ to $x_N$ illustrated are feature vectors corresponding to frames 1 to N of the voice signal. The sign $x_n$ (n is an integer of one or more and N or less) is an 80-dimensional real number vector $R^{80}$. The label conversion unit 120 obtains a vector $\hat{x_n}$ including d-dimensional elements in ascending order of the number of dimensions of each feature vector $x_n$. The vector $\hat{x_n}$ is a d-dimensional real number vector $R^d$.

The label conversion unit 120 normalizes the vectors $\hat{x_n}$ to generate vectors $\widetilde{x_n}$. The label conversion unit 120 converts each of the d-dimensions of the vector $\widetilde{x_n}$ into a base $\beta$ number, and further converts the base $\beta$ number of d-digit into a decimal number. In this way, the label conversion unit 120 converts the feature vectors $x_1$ to $x_N$ corresponding to the frames 1 to N into the self-supervised labels $c_1$ to $c_N$, respectively. The self-supervised label $c_n$ is an integer equal to or greater than zero and less than $\beta^d$.

The model generation unit 130 generates a pre-trained model based on the unlabeled data and the self-supervised labels. The model generation unit 130 may input the unlabeled data to the pre-trained model that is being trained, and update the parameters of the pre-trained model based on the error between the output of the pre-trained model and the self-supervised label. The model generation unit 130 may update the weight of the intermediate layers of the neural network included in the pre-trained model based on backpropagation algorithm.

The additional training unit 140 additionally trains the pre-trained model based on the labeled data to generate a trained model. The additional training unit 140 may perform fine tuning to additionally train the pre-trained model. The additional training unit 140 may perform transfer learning to additionally train the pre-trained model.

The additional training unit 140 may additionally train the pre-trained model so that various speech processing tasks can be executed. The speech processing task may include, for example, speech recognition, speech synthesis, speech enhancement, speaker recognition, speaker authentication, emotion recognition, and speech segment detection.

As illustrated in FIG. 3, the speech processing apparatus 20 includes a model storage unit 201, a speech input unit 210, a task execution unit 220, and a result output unit 230.

The model storage unit 201 is implemented by using, for example, the HD 504 illustrated in FIG. 2. Reading or writing of the data stored in the HD 504 is performed via, for example, the HDD controller 505.

The speech input unit 210, the task execution unit 220, and the result output unit 230 are implemented by, for example, processing executed by the CPU 501 according to a program loaded from the HD 504 to the RAM 503 illustrated in FIG. 2.

The model storage unit 201 stores a trained model. The trained model stored in the model storage unit 201 may be generated by the model training apparatus 10. The trained model stored in the model storage unit 201 may be obtained by additionally training, using the labeled data, the pre-trained model trained using the unlabeled data.

The speech input unit 210 receives an input of speech data to be processed. The speech input unit 210 may receive an input of speech data via a microphone connected to an external device connection I/F included in the speech processing apparatus 20. The speech input unit 210 may receive speech data from a terminal device including a microphone via the communication network N.

The speech input unit 210 may receive an input of a voice signal. The speech input unit 210 may receive an input of a log-Mel spectrogram obtained by converting a voice signal. When the speech input unit 210 receives an input of a voice signal, the speech input unit 210 converts each frame of the voice signal into a log-Mel spectrogram. The dimensionality of the log-Mel spectrogram can be any number. In the present embodiment, the dimensionality of the log-Mel spectrogram is set to, for example, 80.

The task execution unit 220 executes a speech processing task. The task execution unit 220 may execute the speech processing task based on the trained model read from the model storage unit 201. The task execution unit 220 may execute the speech processing task based on the speech data input to the speech input unit 210. The task execution unit 220 may input the speech data to the trained model to execute the speech processing task.

The task execution unit 220 may execute various speech processing tasks. The task execution unit 220 may execute a task of performing speech recognition on speech data input to the speech input unit 210. The task executed by the task execution unit 220 is not limited to speech recognition, and may include, for example, speech synthesis, speech enhancement, speaker recognition, speaker authentication, emotion recognition, and speech segment detection. In a case where the task execution unit 220 executes a task that does not require input speech (e.g., speech synthesis), the speech processing apparatus 20 may not include the speech input unit 210.

The result output unit 230 outputs the execution result of the speech processing task. For example, when the speech processing task is speech recognition, the execution result of the speech processing task includes a recognition result of speech data. The recognition result of the speech data may include text data indicating the content of the speech included in the speech data.

For example, when the speech processing task is speech synthesis, the execution result of the speech processing task includes a voice signal obtained by synthesizing text data. For example, when the speech processing task is speech enhancement, the execution result of the speech processing task includes a voice signal in which voice is emphasized. For example, when the speech processing task is speaker recognition, the execution result of the speech processing task includes identification information for identifying the speaker. For example, when the speech processing task is speaker authentication, the execution result of the speech processing task includes the authentication result of the speaker. For example, when the speech processing task is emotion recognition, the execution result of the speech processing task includes an emotion label. For example, when the speech processing task is speech segment detection, the execution result of the speech processing task includes information indicating a speech segment in the speech data.

The result output unit 230 may display the execution result of the speech processing task on the display 506 included in the speech processing apparatus 20. The result output unit 230 may transmit the execution result of the speech processing task to a terminal device including a display via the communication network N.

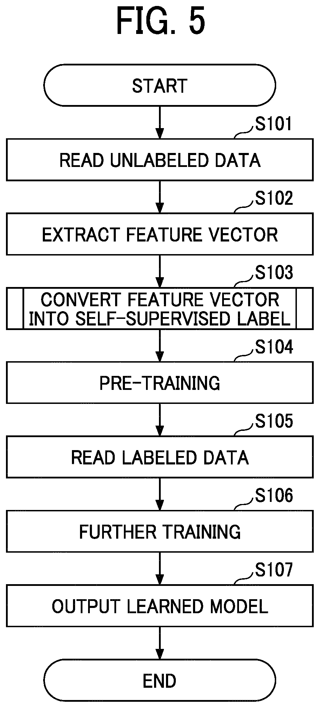

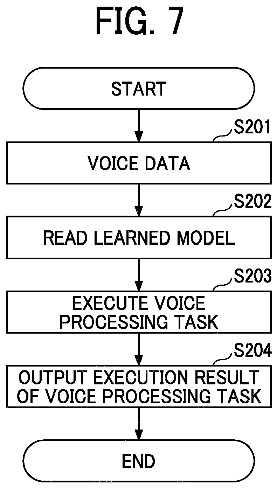

A description is given below of a speech processing method executed by the speech processing system 1000 with reference to FIGS. 5 to 7. The speech processing method may include a model training process (see FIG. 5) and a task execution process (see FIG. 7).

The model training process is a process of generating a trained model for executing the speech processing task. FIG. 5 is a flowchart of a model training process.

In step S101, the feature extraction unit 110 of the model training apparatus 10 reads the unlabeled data from the unlabeled dataset storage unit 101. The feature extraction unit 110 may read one or more pieces of unlabeled data that have not been trained among the unlabeled data stored in the unlabeled data storage unit 101.

In step S102, the feature extraction unit 110 of the model training apparatus 10 extracts a feature vector from the unlabeled data read in step S101. Specifically, the feature extraction unit 110 applies discrete cosine transform to convert the unlabeled data, which is a log-Mel spectrogram, into Mel-frequency cepstral coefficients. The feature extraction unit 110 transmits the extracted feature vector to the label conversion unit 120.

In step S103, the label conversion unit 120 of the model training apparatus 10 receives the feature vector from the feature extraction unit 110. The label conversion unit 120 converts the feature vector into a self-supervised label according to a predetermined conversion rule. The label conversion unit 120 transmits the self-supervised label to the model generation unit 130.

In step S104, the model generation unit 130 of the model training apparatus 10 reads the unlabeled data read by the feature extraction unit 110 in step S101 from the unlabeled data storage unit 101. The model generation unit 130 receives the self-supervised labels from the label conversion unit 120. The model generation unit 130 generates a pre-trained model based on the unlabeled data and the self-supervised labels. The model generation unit 130 transmits the pre-trained model to the additional training unit 140.

Specifically, the model generation unit 130 inputs the unlabeled data to the pre-trained model that is being trained. The pre-trained model executes the speech processing task on the input unlabeled data to output the execution result of the speech processing task. The model generation unit 130 calculates an error between the output of the pre-trained model and the self-supervised labels. The model generation unit 130 updates the parameters of the pre-trained model based on the error between the output of the pre-trained model and the self-supervised labels.

The model training apparatus 10 may repeatedly execute the processing from step S101 to step S104. For example, the model training apparatus 10 repeatedly updates the parameters of the pre-trained model until an end condition for ending the pre-training is satisfied. The end condition may be, for example, that the number of times of update of the parameters is equal to or larger than a predetermined threshold. The end condition may be, for example, that the update amount of the parameter has converged.

In step S105, the additional training unit 140 of the model training apparatus 10 reads the labeled data from the labeled data storage unit 102. The additional training unit 140 may read one or more pieces of untrained labeled data among the labeled data stored in the labeled data storage unit 102.

In step S106, the additional training unit 140 of the model training apparatus 10 receives the pre-trained model from the model generation unit 130. The additional training unit 140 additionally trains the pre-trained model based on the labeled data read in the step S105. Thus, the trained model is generated.

The model training apparatus 10 may repeatedly execute the processing from step S105 to step S106. For example, the model training apparatus 10 repeatedly updates the parameters of the pre-trained model until an end condition for ending the additional training is satisfied. The end condition for ending the additional training may be the same condition as the end condition for ending the pre-training, or may be a different condition.

In step S107, the additional training unit 140 of the model training apparatus 10 outputs the trained model. The additional training unit 140 may transmit the trained model to the speech processing apparatus 20. The speech processing apparatus 20 may receive the trained model from the model training apparatus 10 and store the trained model in the model storage unit 201.

The additional training unit 140 may store the trained model in a storage device such as a HD 504 of the model training apparatus 10. The trained model stored in the storage device of the speech processing apparatus 20 may be read by the speech processing apparatus 20. The model training apparatus 10 may transmit the trained model stored in the storage device to the speech processing apparatus 20 in response to a request from the speech processing apparatus 20.

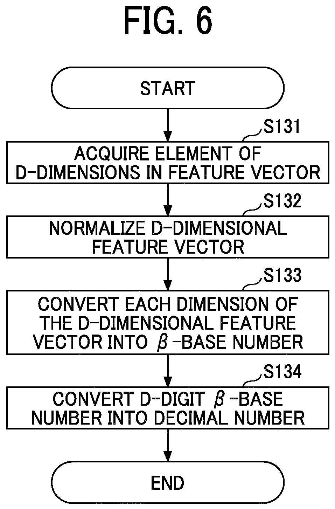

A description is given below of label conversion processing (step S103 in FIG. 5) with reference to FIG. 6. FIG. 6 is a flowchart of the label conversion processing.

In step S131, the label conversion unit 120 obtains elements of d-dimension or less in the feature vector. Specifically, the label conversion unit 120 obtains elements from the first dimension to the d-th dimension in the 80-dimensional Mel-frequency cepstral coefficients. In this case, d is set to 10.

In step S132, the label conversion unit 120 normalizes the d-dimensional feature vector obtained in step S131 so that the average is zero and the variance is one. Specifically, the label conversion unit 120 subtracts the minimum value from each dimension of the d-dimensional feature vector and divides the result by the difference between the maximum value and the minimum value.

In step S133, the label conversion unit 120 converts each dimension of the d-dimensional feature vector normalized in step S132 into a single-digit base $\beta$ number. For example, when each dimension of the feature vector is converted into a binary number, the label conversion unit 120 sets $\lambda_1$ to zero and calculates Equation 2.

In step S134, the label conversion unit 120 connects the d pieces of base $\beta$ numbers converted in step S132 according to the number of dimensions. As a result, an integer expressed by a d-digit base $\beta$ number is generated. The label conversion unit 120 converts the d-digit base $\beta$ number into a decimal integer. The label conversion unit 120 obtains the decimal integer as a self-supervised label.

A description is given below of the relation between the feature vector and the self-supervised label. In a first example, d is set to 10 and $\beta$ is set to 2, and a 10-dimensional feature vector x is converted into a 10-digit binary number $\hat{x}$ to obtain a self-supervised label C that is a decimal integer. The threshold $\lambda_1$ is set to zero. In this case, x, $\hat{x}$, and C are as follows:

$$x = [0.8, -0.4, 0.3, 0.8, 0.2, -0.5, -0.1, 0.6, -0.3, 0.1],$$

$$\hat{x} = [1, 0, 1, 1, 1, 0, 0, 1, 0, 1],$$

and

$$C = \{1011100101\}_2 = 741$$

In a second example, d is set to 6 and $\beta$ is set to 3, a 6-dimensional feature vector x is converted into a 6-digit ternary number $\hat{x}$ to obtain a self-supervised label C that is a decimal integer. The thresholds are $\lambda_1$ and $\lambda_2$. $\lambda_1$ is set to -0.5 and $\lambda_2$ is set to 0.5. In this case, x, $\hat{x}$, and C are as follows:

$$\mathbf{x} = [0.8, -0.4, 0.3, 0.8, 0.2, -0.5],$$

$$\hat{x} = [2, 1, 1, 2, 1, 1],$$

and

$$C = \{211211\}_3 = 616$$

In a third example, d is set to five and $\beta$ is set to four, and a 5-dimensional feature vector x is converted into a 5-digit quaternary number $\hat{x}$ to obtain a self-supervised label C that is a decimal integer. The thresholds are $\lambda_1, \lambda_2$ and $\lambda_3$. $\lambda_1$ is set to -0.5, $\lambda$ is set to zero, and $\lambda_3$ is set to 0.5. In this case, x, $\hat{x}$, and C are as follows:

$$\mathbf{x} = [0.8, -0.4, 0.3, 0.8, 0.2],$$

$$\hat{x} = [3, 1, 2, 3, 2],$$

and

$$C = \{31232\}_4 = 878$$

The task execution process is a process of executing the speech processing task based on a trained model. FIG. 7 is a flowchart of a task execution process.

In step S201, the speech input unit 210 of the speech processing apparatus 20 receives an input of speech data to be processed. When the speech data is a voice signal in a time domain, the speech input unit 210 converts the voice signal into a log-Mel spectrogram. The speech input unit 210 transmits the speech data to the task execution unit 220.

In step S202, the task execution unit 220 of the speech processing apparatus 20 receives the speech data from the speech input unit 210. The task execution unit 220 reads a trained model from the model storage unit 201.

In step S203, the task execution unit 220 of the speech processing apparatus 20 executes the speech processing task based on the speech data input in step S201 and the trained model read in step S202. Specifically, the task execution unit 220 inputs the speech data to the trained model. The trained model executes the speech processing task on the input speech data and outputs an execution result of the speech processing task. The task execution unit 220 obtains the execution result output from the trained model. The task execution unit 220 transmits the execution result of the speech processing task to the result output unit 230.

In step S204, the result output unit 230 of the speech processing apparatus 20 receives the execution result of the speech processing task from the task execution unit 220. The task execution unit 220 may display the execution result of the speech processing task on the display 506 of the speech processing apparatus 20. The task execution unit 220 may transmit the execution result of the speech processing task to a terminal device including a display via the communication network N.

The speech processing apparatus 20 executes the speech processing task based on the trained model. The trained model is trained using speech data and labels obtained by converting feature vectors extracted from the speech data according to a predetermined rule. Since the labels used for the self-supervised training are derived using the deterministic operation according to a predetermined rule without using a statistical distribution of data set, the speech processing task can be efficiently executed.

As the predefined rule, the feature vector may be quantized into a predefined number of integers. Alternatively, as the predefined rule, each element of the feature vector may be converted into a single-digit base $\beta$ number, where $\beta$ is an integer equal to or greater than 2, to quantize the feature vector into integers. Since the integers obtained by quantizing the elements of the feature vector are used as self-supervised labels, the self-supervised labels can be derived with a small amount of calculation.

As the predefined rule, a part of the feature vector may be quantized into an integer. The part of the feature vector may include elements of the feature vector that have dimensions less than or equal to d-dimension, where d is an integer less than the number of elements of the feature vector. The type of self-supervised labels can be adjusted, and thus the pre-trained model can be efficiently generated.

The part of the feature vector may include an element indicating language information in the feature vector. The feature vector may include Mel-frequency cepstral coefficients. Since the Mel-frequency cepstral coefficients store language information in the low-dimensional element, a pre-trained model suitable for speech processing can be generated.

The trained model may be additionally trained using the speech data and text data indicating the content of the speech included in the speech data. A trained model for executing various speech processing tasks can be efficiently generated.

The speech processing apparatus 20 may input the speech data to the trained model to execute a task of performing speech recognition on speech data. Thus, speech recognition can be efficiently executed.

Since self-supervised learning highly suited for a speech processing task can be implemented, for example, speech including noise or reverberation from a position away from a microphone or casual spoken language between humans can be recognized with high accuracy. As a result, the speech processing apparatus 20 can be utilized in a business site where accuracy is required. For example, the speech processing apparatus 20 can support diverse work styles as a tool for automating voice communication processes, such as automatic generation of meeting minutes or reports, real-time captioning during meetings, and voice interaction with artificial Intelligence (AI) agents, in workplaces where many people share tasks. When the speech processing apparatus 20 is applied to a voice interaction with an AI agent, the speech processing apparatus 20 can immediately recognize and analyze a speech of a customer and dynamically generate a next question, and thus the speech processing apparatus 20 can accurately grasp a need of the customer and make an appropriate recommendation.

Each of the functions described above may be implemented by one or more processing circuits or circuitry. The "processing circuit or circuitry" in the present disclosure includes a programmed processor to execute functions by software, such as a processor implemented by an electronic circuit, and a device such as an application-specific integrated circuit (ASIC) that is designed to execute the above functions, a digital signal processor (DSP), a field-programmable gate array (FPGA), and circuit modules arranged to perform the recited functions.

The group of apparatuses or devices according to the embodiments of the present disclosure are merely one example of a plurality of computing environments that implement the embodiments disclosed in the present specification. In some embodiments, the model training apparatus 10 or the speech processing apparatus 20 includes a plurality of computing devices, such as a server cluster. The computing devices are configured to communicate with one another through any type of communication link including, for example, a network or a shared memory, and perform the processes disclosed in the present specification.

A description is given below of some aspects of the present disclosure.

Aspect 1

A speech processing apparatus includes a task execution unit. The task execution unit executes a task related to speech processing based on a trained model. The trained model is a model trained using first speech data and a label obtained by converting, according to a predetermined rule, a feature vector extracted from the first speech data.

Aspect 2

In the speech processing apparatus according to Aspect 1, the predetermined rule quantizes the feature vector to an integer having a predetermined value.

Aspect 3

In the speech processing apparatus according to Aspect 2, the predetermined rule sets $\beta$ as an integer equal to or greater than 2 and converts each element of the feature vector into a single-digit base $\beta$ number to quantize the feature vector into the integer.

Aspect 4

In the speech processing apparatus according to Aspect 2 or 3, the predetermined rule quantizes a part of the feature vector to the integer.

Aspect 5

In the speech processing apparatus according to Aspect 4, the part of the feature vector includes an element indicating language information in the feature vector.

Aspect 6

In the speech processing apparatus according to Aspect 4 or 5, the part of the feature vector includes elements of the feature vector that have dimensions less than or equal to d-dimension, where d is an integer less than the number of elements of the feature vector.

Aspect 7

In the speech processing apparatus according to any one of Aspects 1 to 6, the feature vector includes Mel-frequency cepstral coefficients.

Aspect 8

In the speech processing apparatus according to any one of Aspects 1 to 7, the trained model is a model additionally trained using the first speech data and text data indicating the content of a speech included in the first speech data.

Aspect 9

The speech processing apparatus according to Aspect 8 further includes a voice input unit that receives an input of second speech data. The task execution unit inputs the second speech data to the trained model to execute the task for performing speech recognition on the second speech data.

Aspect 10

A speech processing system includes a model training apparatus and a speech processing apparatus. The speech processing apparatus includes a task execution unit that executes a task related to speech processing based on a trained model. The model training apparatus includes a feature extraction unit, a label conversion unit, and a model generation unit. The feature extraction unit extracts feature vectors from speech data. The label conversion unit converts the feature vectors into labels according to a predetermined rule. The model generation unit generates the trained model using the speech data and the labels.

Aspect 11

A speech processing method is executed by a computer. The method includes executing a task related to speech processing based on a trained model. The trained model is a model trained using speech data and labels obtained by converting feature vectors extracted from the speech data according to a predetermined rule.

Aspect 12

A program causes a computer to perform a method. The method includes executing a task related to speech processing based on a trained model. The trained model is a model trained using speech data and labels obtained by converting feature vectors extracted from the speech data according to a predetermined rule.

Although some embodiments of the present disclosure have been described in detail above, the present disclosure is not limited to such specific embodiments, and various modifications and changes can be made within the scope of the gist of the invention described in the claims.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be

**EP 4 704 077 A1**

implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

**Claims**

1. A speech processing apparatus (20) comprising:

   a task execution unit (220) configured to execute a task related to speech processing based on a trained model, the trained model being trained using speech data and one or more labels obtained by converting, according to a predetermined rule, one or more feature vectors extracted from the speech data.

2. The speech processing apparatus (20) according to claim 1,
   wherein the predetermined rule quantizes the feature vector to an integer having a predetermined value.

3. The speech processing apparatus (20) according to claim 2,
   wherein the predetermined rule sets $\beta$ to be an integer equal to or greater than 2 and converts each element of the feature vector into a single-digit base $\beta$ number to quantize the feature vector into the integer.

4. The speech processing apparatus (20) according to claim 2,
   wherein the predetermined rule quantizes a part of the feature vector to the integer.

5. The speech processing apparatus (20) according to claim 4,
   wherein the part of the feature vector includes the element indicating language information in the feature vector.

6. The speech processing apparatus (20) according to claim 4,
   wherein the part of the feature vector includes elements of the feature vector that have dimensions less than or equal to d-dimension, where d is an integer less than the number of elements in the feature vector.

7. The speech processing apparatus (20) according to any one of claims 1 to 6,
   wherein the feature vector includes Mel-frequency cepstral coefficients.

8. The speech processing apparatus (20) according to any one of claims 1 to 6,
   wherein the trained model is a model additionally trained using the speech data and text data indicating a content of a speech included in the speech data.

9. The speech processing apparatus (20) according to claim 8, further comprising a voice input unit (210) configured to receive an input of another speech data, and
   wherein the task execution unit (220) is configured to input the other speech data to the trained model to execute the task for performing speech recognition on the other speech data.

10. A speech processing system comprising:

    a model training apparatus (10); and
    the speech processing apparatus (20) according to any one of claims 1 to 9,
    the model training apparatus (10) including:

       a feature extraction unit (110) configured to extract the feature vectors from the speech data;
       a label conversion unit (120) configured to convert the feature vectors into the labels according to the predetermined rule; and
       a model generation unit (130) configured to generate the trained model using the speech data and the labels.

11. A speech processing method executed by a computer, the method comprising:
executing (S201, S202, S203, S204) a task related to speech processing based on a trained model, the trained model being trained using speech data and one or more labels obtained by converting one or more feature vectors extracted from the speech data according to a predetermined rule.

12. A carrier medium storing computer-readable program code that, when executed by a computer, causes the computer to perform a method, the method comprising:
executing (S201, S202, S203, S204) a task related to speech processing based on a trained model, the trained model being trained using speech data and one or more labels obtained by converting one or more feature vectors extracted from the speech data according to a predetermined rule.

# FIG. 1

1000

COMMUNICATION NETWORK

# FIG. 2

# FIG. 3

# FIG. 4

# FIG. 5

```
        ┌─────────────────┐
        │      START      │
        └─────────────────┘
                 │
                 ▼              S101
        ┌─────────────────────┐
        │  READ UNLABELED DATA │
        └─────────────────────┘
                 │
                 ▼              S102
        ┌─────────────────────┐
        │ EXTRACT FEATURE VECTOR│
        └─────────────────────┘
                 │
                 ▼              S103
        ┌─────────────────────┐
        ││ CONVERT FEATURE VECTOR││
        ││INTO SELF-SUPERVISED LABEL││
        └─────────────────────┘
                 │
                 ▼              S104
        ┌─────────────────────┐
        │     PRE-TRAINING     │
        └─────────────────────┘
                 │
                 ▼              S105
        ┌─────────────────────┐
        │   READ LABELED DATA  │
        └─────────────────────┘
                 │
                 ▼              S106
        ┌─────────────────────┐
        │   FURTHER TRAINING   │
        └─────────────────────┘
                 │
                 ▼              S107
        ┌─────────────────────┐
        │ OUTPUT LEARNED MODEL │
        └─────────────────────┘
                 │
                 ▼
        ┌─────────────────┐
        │       END       │
        └─────────────────┘
```

# FIG. 6

START

S131

ACQUIRE ELEMENT OF
D-DIMENSIONS IN FEATURE VECTOR

S132

NORMALIZE D-DIMENSIONAL
FEATURE VECTOR

S133

CONVERT EACH DIMENSION OF
THE D-DIMENSIONAL FEATURE
VECTOR INTO $\beta$-BASE NUMBER

S134

CONVERT D-DIGIT $\beta$-BASE
NUMBER INTO DECIMAL NUMBER

END

# FIG. 7

```
        ┌─────────────────────────┐
        │          START          │
        └─────────────────────────┘
                     │
                     │  S201
                     ▼
        ┌─────────────────────────┐
        │       VOICE DATA        │
        └─────────────────────────┘
                     │
                     │  S202
                     ▼
        ┌─────────────────────────┐
        │    READ LEARNED MODEL    │
        └─────────────────────────┘
                     │
                     │  S203
                     ▼
        ┌─────────────────────────┐
        │     EXECUTE VOICE        │
        │    PROCESSING TASK       │
        └─────────────────────────┘
                     │
                     │  S204
                     ▼
        ┌─────────────────────────┐
        │ OUTPUT EXECUTION RESULT  │
        │ OF VOICE PROCESSING TASK │
        └─────────────────────────┘
                     │
                     ▼
        ┌─────────────────────────┐
        │           END           │
        └─────────────────────────┘
```

Europäisches
Patentamt

European
Patent Office

Office européen
des brevets

## EUROPEAN SEARCH REPORT

**Application Number**

EP 25 19 2976

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 875 264 A (CARLSTROM DAVID L [US]) 23 February 1999 (1999-02-23) * column 2, line 46 - column 23, line 5; figures 4,18 * ----- | 1-12 | INV. G10L15/06 G10L15/16 G10L19/038 |
| | | | **TECHNICAL FIELDS SEARCHED (IPC)** G10L |

The present search report has been drawn up for all claims

| Place of search | Date of completion of the search | Examiner |
|---|---|---|
| Munich | 27 November 2025 | Dobler, Ervin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 2976

This annex lists the patent family members relating to the patent documents cited in  the above-mentioned European search report.
The members are as contained in the European Patent Office EDP file on
The European Patent Office is in no way liable for these particulars which are merely given for the purpose of information.

27-11-2025

| Patent document cited in search report | Publication date | Patent family member(s) | Publication date |
|---|---|---|---|
| US 5875264 A | 23-02-1999 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023064381 A

- JP 7052866 B

**Non-patent literature cited in the description**

- **WEI-NING HSU** ; **BENJAMIN BOLTE** ; **YAO-HUNG HUBERT TSAI** ; **KUSHAL LAKHOTIA** ; **RUSLAN SALAKHUTDINOV** ; **ABDELRAHMAN MOHAMED**. HuBERT: Self-Supervised Speech Representation Learning by Masked Prediction of Hidden Units. *IEEE/ACM Transactions on Audio, Speech, and Language Processing*, 2021, vol. 29, 3451-3460